# FASCICULE DE BREVET EUROPEEN

(11) **EP 1 390 921 B1**
(45) Date de publication et mention de la délivrance du brevet: **06.09.2006**
(21) Numéro de dépôt: 02740813.7
(22) Date de dépôt: 27.05.2002
(51) Int. Cl.: G07F 7/10, G07F 7/08

(54) **TERMINAL ELECTRONIQUE DE PAIEMENT, CARTE A PUCE ADAPTEE A UN TEL TERMINAL ET PROCEDE DE CHARGEMENT D'UNE CLE SECRETE DANS UN TEL TERMINAL**
ELEKTRONISCHES BEZAHLUNGSENDGERÄT, AN EIN SOLCHES ENDGERÄT ANGEPASSTE CHIPKARTE UND VERFAHREN ZUM LADEN EINES GEHEIMSCHLÜSSELS IN EINEM SOLCHEN ENDGERÄT
ELECTRONIC PAYMENT TERMINAL, SMART CARD ADAPTED TO SUCH A TERMINAL ET METHOD FOR LOADING A SECRET KEY IN SUCH A TERMINAL

(30) Priorité: 31.05.2001 FR 0107204
(43) Date de publication de la demande: 25.02.2004
(73) Titulaire: Axalto S.A., 92120 Montrouge (FR)
(72) Inventeur: QUESSELAIRE, Dominique, F-94230 Cachan (FR)
(74) Mandataire: Cassagne, Philippe M.J.
(86) Numéro de dépôt international: PCT/FR2002/001766
(87) Numéro de publication internationale: WO 2002/097747

(56) Documents cités:
- EP-A- 0 889 450
- WO-A-98/59327
- FR-A- 2 759 833
- US-A- 5 745 571
- US-A- 5 887 266
- US-A- 6 097 606
- US-A- 6 152 367

## Description

La présente invention concerne un appareil électronique de paiement lecteur de carte encore appelé terminal de paiement, elle concerne également une carte à puce destiné à être intégrée dans le circuit électronique équipant ledit terminal. La présente invention concerne également un procédé de téléchargement de données confidentielles dans un tel terminal.

Il existe aujourd'hui de nombreux terminaux de paiement lecteur de carte de paiement qui ont principalement en commun d'avoir un circuit électronique gérant le fonctionnement de l'appareil qui est formé par une plaque circuit imprimé sur laquelle sont soudés de nombreux composants électroniques et notamment des microcontrôleurs.

Classiquement un appareil de paiement lecteurs de cartes bancaires se compose d'un terminal généralement portatif avec ou sans fil, fonctionnant seule ou avec une base.

Les fonctions allouées respectivement à la base et au terminal peuvent varier d'une réalisation à l'autre. La base est généralement reliée à un centre de paiement par le réseau téléphonique commuté et transmet, en réponse aux messages reçus du terminal, des messages à destination des serveurs bancaires. La base sert également de borne de rechargement pour alimenter l'accumulateur électrique équipant le terminal. Par ailleurs, la base peut servir à imprimer les tickets de transaction.

Le terminal portatif comporte donc, au moins un lecteur de cartes de paiement, un clavier de saisie de données, un écran d'affichage, une alimentation électrique sous la forme notamment d'un accumulateur rechargeable et un circuit électronique de commande sous la forme d'une carte de circuit imprimé intégrant notamment un microcontrôleur principal comportant un microprocesseur et différentes interfaces d'entrée sortie. Ce microcontrôleur principal a plus particulièrement la charge de faire fonctionner le terminal et notamment les différents périphériques.

Il est connu par ailleurs du brevet US 5 887 266 d'équiper de tels appareils portatifs d'un ou plusieurs lecteurs de cartes à puce miniatures satisfaisant au standard GSM 11.11, cartes à puces miniatures encore appelées communément cartes SAM (Secure Access Module). Ces cartes SAM ont un contacteur entrées/sorties (I/O pad) répondant à la norme ISO (Cnet) des cartes à puces. De telles cartes SAM du fait de leur petite taille peuvent être facilement installées sur un appareil électronique portatif et donc en particulier sur un terminal de paiement lecteur de cartes.

L'utilisation de telles cartes SAM dans des terminaux de paiement est aujourd'hui dédiée à l'exécution de tâches spécifiques telle que des opérations d'identification, de vérification de mot de passe, de gestion d'application financières de porte monnaie électronique mettant en oeuvre des algorithmes et des données confidentielles que les organismes gestionnaires propriétaires ne souhaitent pas diffuser et donc incorporer directement au circuit électronique du terminal.

Ces cartes SAM mises en oeuvre par les terminaux portatifs, tels que les terminaux de paiement ou les téléphones mobiles contiennent donc des informations confidentielles et sont délivrées par des opérateurs (bancaires, etc.) à des utilisateurs parfaitement identifiés (commerçants, etc.) à charge pour ces derniers de les introduire dans les terminaux pour pouvoir exécuter sur ces appareils des applications spécifiques tel que le débit/ crédit d'un porte-monnaie électronique.

Cartes et terminaux sont donc produits et développés de façon totalement distincte. Le terminal équipé de lecteurs de cartes SAM considère simplement les cartes SAM comme des périphériques et le microcontrôleur du terminal est configuré pour dialoguer avec ces dernières selon des protocoles prédéterminés et pour accomplir des tâches prédéfinies qui se limitent généralement à transférer des données et ou des commande entre ces cartes à puces et la carte de paiement.

La présente invention se propose d'utiliser l'infrastructure des terminaux équipés de lecteur(s) de carte SAM pour modifier la conception du circuit électronique des terminaux.

Selon l'invention les tâches normalement réalisées par un unique microprocesseur équipant le terminal sont réparties sur plusieurs microprocesseurs fonctionnant en parallèle, au moins un de ces microprocesseurs étant intégré à un support répondant au format des cartes SAM c'est-à-dire à la norme GSM 11.11.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
la figure 1 est une vue schématique en perspective d'un appareil de paiement selon l'invention;
la figure 2 est une vue schématique en perspective du dessous de l'appareil représenté à la figure 1;
la figure 3 est un schéma bloc du circuit électronique équipant un appareil de paiement selon l'invention.

Pour simplifier la description, seules les éléments permettant de comprendre l'invention ont été représentés. Par ailleurs les mêmes éléments portent les mêmes références d'une figure à l'autre.

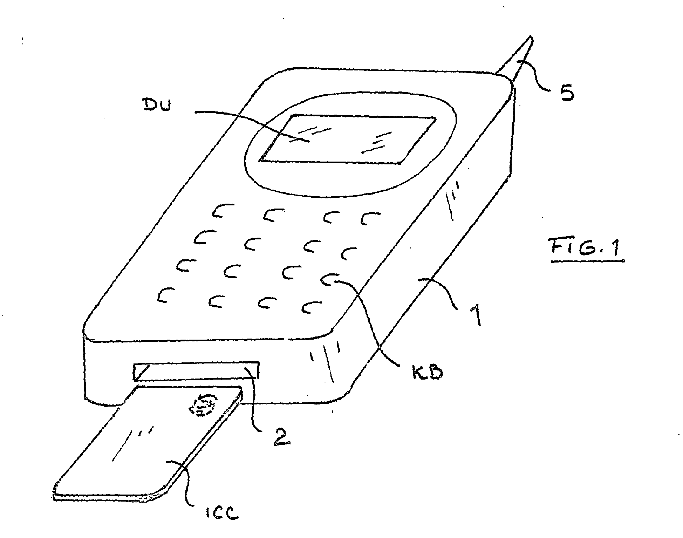

Sur la figure 1, on a représenté un appareil de paiement lecteur de cartes bancaire. Cet appareil se compose d'un terminal portatif référencé 1 incorporant des moyens de lecture des cartes de paiement quelles soient à puces électroniques et/ ou à pistes magnétiques.

Ce terminal portatif 1 comporte de façon connue, au moins une fente 2 d'introduction d'une carte de paiement ICC, du type à puce électronique, coopérant avec des moyens de lecture non figurés. Le terminal 1 comporte également des moyens non figurés de lecture pour cartes de paiement à pistes magnétiques. Le terminal comporte également un clavier KB de saisie de données ainsi qu'un écran d'affichage DU.

Le terminal 1 présente également de façon classique une alimentation électrique sous la forme notamment d'un accumulateur rechargeable, un circuit électronique de commande sous la forme notamment d'une carte de circuit imprimé sur laquelle sont notamment connectée au moins un microcontrôleur et des moyens d'émission/réception de messages radio- fréquence coopérant avec une antenne 5.

Bien évidemment cette liste des équipements du terminal 1 n'est pas limitative de la présente invention. Le terminal de paiement 1 peut en outre comporter des moyens d'impression d'un ticket de transaction. De même, le terminal peut être du type à fil et ne pas comporter de moyens d'émission/réception de messages radiofréquence. De même ce terminal peut être amené à coopérer avec une base fixe. Une telle base peut faire office, par exemple, de chargeur de batterie, d'imprimante, si celle-ci n'est pas embarquée sur le terminal, ou bien encore de connexion au réseau de télécommunication public commuté. Que se soit par un réseau de radio-télécommunication ou par le réseau de télécommunication public commuté, le terminal doit accéder aux serveurs bancaires pour obtenir des autorisations ou bien encore transférer les opérations financières effectuées.

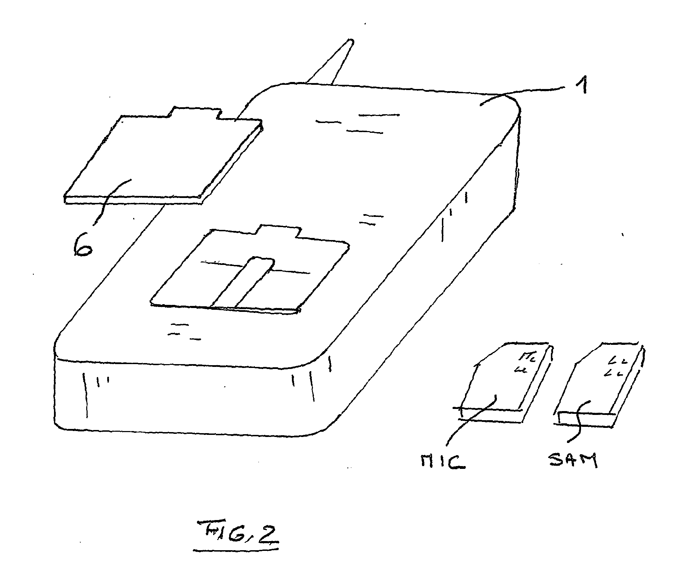

La face arrière du terminal 1 qui est représentée à la figure 2 comporte des logements protégés par un capot amovible 6 pour enficher des cartes à puce miniatures satisfaisant au standard GSM 11.11, cartes à puce de type SAM.

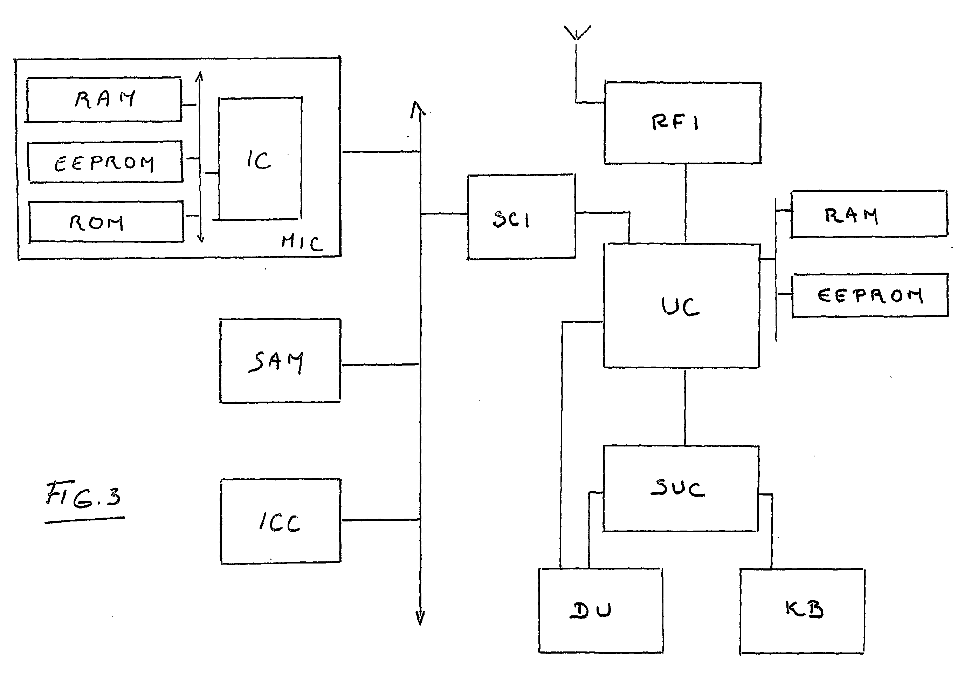

En se reportant à la figure 3, le circuit électronique du terminal se compose schématiquement d'une plaque circuit imprimé où sont soudés les composants électroniques nécessaires au fonctionnement du terminal et notamment un microcontrôleur principal UC, qui peut être un microcontrôleur spécialement développé pour le terminal (ASIC). Ce microcontrôleur UC est associé à une mémoire non volatile de programme EEPROM et à une mémoire de donnée RAM ainsi qu'à des interfaces I/O entrée-sortie desservant les différents composants électroniques et notamment le notamment le module émetteur/récepteur radiofréquence RFI, l'écran d'affichage DU et le clavier KB. Le microcontrôleur principal UC est également connecté par l'intermédiaire d'une interface appropriée SCI, à différents lecteurs de carte à puce dont l'un est connecté à une micro carte à puce MIC dont le rôle sera détaillée ci-après. Le microcontrôleur peut ainsi se trouver connecté par l'intermédiaire de l'interface SCI, en plus de la carte MIC, à une carte SAM et à une carte de paiement à puce ICC. La plaque de circuit intégré peut comporter également un microcontrôleur sécurisé SUC auquel sont alors connectés le clavier KB et l'afficheur graphique DU.

Le microcontrôleur de sécurité SUC est généralement présent lorsque le terminal doit lire des cartes à pistes magnétiques et/ou doit garantir la confidentialité du code secret d'identification encore appelé PIN code qui est saisi par l'utilisateur. Le microcontrôleur de sécurité SUC a alors pour principales fonctions de brouiller les signaux transmis de façon à interdire la détection des informations saisies sur le clavier KB par simple analyse des signaux entrant dans le microcontrôleur UC. Le microcontrôleur SUC contient également des clés secrètes bancaires et des algorithmes de chiffrement à clé secrète correspondants pour communiquer de façon sécurisée le PIN code sur les réseaux de télécommunication à destination des serveurs bancaires, lesquels disposent des mêmes clés. Le microcontrôleur de sécurité SUC lorsqu'il est présent, se trouve directement connecté au microcontrôleur principal par l'intermédiaire d'un bus de communication.

La carte SAM éventuellement présente dans le terminal a pour objet de gérer des applications spécifiques propriétaires, telle qu'une application porte-monnaie électronique. La carte de paiement porte monnaie électronique se trouve alors débitée ou créditée directement par l'intermédiaire de la carte SAM suivant des mécanismes et algorithmes spécifiques et secrets qui sont la propriété exclusive de l'organisme gestionnaire de cette application. Dans ce cas le terminal 1 et notamment son circuit électronique, n'a qu'un rôle transparent, se limitant à échanger des données et notamment les commandes élaborées par la carte SAM, entre la carte de paiement, le clavier, l'afficheur et la carte SAM.

La micro carte à puce MIC définissant un coprocesseur arithmétique est formée principalement d'un microprocesseur IC, d'une mémoire de type ROM incluant un système d'exploitation de la carte, d'une mémoire non volatile de type EEPROM et d'une mémoire de type RAM destinée au traitement des données à recevoir en provenance du microcontrôleur principal UC.

Selon l'invention, plusieurs applications logiciel sont chargées dans les mémoires programmes de la micro carte à puce MIC.

Ces applications incorporées dans la micro carte à puce MIC, ont pour objet de soulager le microcontrôleur principal UC dans la mise en oeuvre d'algorithmes pouvant nécessiter des capacités de calcul important, en particulier lors d'opérations de chiffrement/déchiffrement mettant en oeuvre des algorithmes de type RSA.

Un des logiciels chargés dans la carte MIC peut être dédié au calcul d'authentification à clé publique de la carte de paiement lorsqu'un système d'authentification à clé publique de type PKI (Public Key Infrastructure) des cartes de paiement est mis en oeuvre.

Un tel système est ainsi connu sous le nom de DDA pour Dynamic Data Authentication. Ce système est basé sur une méthode de chiffrement de type asymétrique, comme par exemple l'algorithme RSA ainsi nommé d'après ses inventeurs Rivest, Shamir et Adleman basé sur l'exponentiation modulaire. Le principe d'une telle méthode de chiffrement asymétrique est de disposer de deux clés pour chiffrer et déchiffrer. La clé de déchiffrement ne peut pas être déduite de la clé de chiffrement et inversement. Une clé est rendue publique (Public Key) tandis qu'une clé est gardée confidentielle, c'est la clé privée (Private Key).

Le système DDA consiste donc à utiliser une unique autorité de certification, des organismes de gestion des cartes de paiement (VISA, MASTERCARD, etc.) et des banques ou organismes financiers qui délivrent les cartes de paiement aux utilisateurs finaux. Chacune de ces entités dispose d'un algorithme de chiffrement asymétrique et donc d'une clé publique (Public Key) respectivement PCA, PI et PIC ainsi qu'une clé privée (Private Key) respectivement SCA, SI et SIC. Chaque carte de paiement authentique reçoit alors deux certificats d'authentification, les clés publiques PI et PIC de l'organisme de gestion et de la banque correspondants certifiées respectivement avec la clé privée SCA de l'autorité de certification et avec la clé privée de l'organisme de gestion SI, ainsi que la clé secrète de la banque émettrice SIC.

Pour vérifier si une carte insérée dans le terminal est authentique le terminal demande à la carte de lui communiquer la clé PI certifiée par la clé SCA, le terminal disposant de la clé PCA est à même de vérifier l'authenticité de cette signature et d'en déduire l'authenticité de la clé PI. Le terminal demande ensuite la clé PIC certifiée par la clé SI. De façon similaire à l'étape précédente le terminal disposant de la clé PI vérifie l'authenticité de la signature et en déduit l'authenticité de la PIC. Le terminal n'a plus alors qu'à vérifier la signature que lui a adressée la carte de paiement sous la forme d'un nombre N tiré de façon aléatoire et du certificat correspond à ce nombre N chiffré en utilisant la clé sécrète SIC. Le terminal disposant de la clé PIC est alors à même de déterminer l'authenticité de la signature en déchiffrant le certificat et en vérifiant que le résultat est bien N.

Les données fournies par la carte de paiement ICC à la carte MIC transitent par le microcontrôleur, la carte MIC se chargeant de mettre en oeuvre l'algorithme de chiffrement asymétrique pour chacune des étapes précitées, lesquelles sont ainsi regroupées en un seul traitement. La clé publique PCA est soit introduite dès le départ dans la carte soit introduite ultérieurement par exemple par téléchargement.

Conformément à l'invention, les calculs arithmétiques en cascade précités que doit mettre en oeuvre le terminal dans le cas d'une authentification de la carte de paiement ICC selon la méthode DDA, se trouvent déportés dans la carte MIC. Cela permet d'optimiser la réalisation de ces calculs notamment en disposant de circuits intégrés à logique câblée permettant des temps de calcul réduits.

La clé publique PCA et les algorithmes mis en oeuvre pour la méthode DDA sont librement communiqués aux fabricants de terminaux et sont donc chargés dans la carte MIC de préférence lors de la fabrication de cette dernière ou lors de l'initialisation du terminal 1.

Une autre application possible qui peut être mise facilement en oeuvre est le chiffrement du PIN code saisi par l'utilisateur et transmis à la carte à puce ICC. Pour accroître la sécurité, il est souhaitable de transférer le PIN code à la carte non pas en claire mais sous forme chiffrée. Dans ce cas, le PIN code transite par la carte MIC qui le renvoie chiffré en utilisant la clé publique PIC et le nombre N que lui a envoyé la carte lors de son authentification. Seule la carte connaissant N et la clé secrète SIC est alors à même de déduire du message reçu le PIN code de l'utilisateur.

Une autre application qui peut être mise facilement en oeuvre est la personnalisation du terminal. Pour certaines applications et en particulier pour opérer les cartes magnétiques, le terminal doit recevoir des informations particulières telles que par exemple des codes confidentiels nécessaires notamment pour réaliser des opérations de chiffrement à clé secrète de type DES (Data Encryption System). En effet, les cartes magnétiques nécessitent d'opérer préalablement à chaque transaction une demande d'autorisation en ligne qui suppose l'envoi du code secret de l'utilisateur ou PIN code. Le chiffrement du PIN code est opéré par le processeur sécurisé SUC contenant une clé secrète Ks fournit par la banque ou l'organisme de gestion des cartes. Le mot de passe PIN saisi par l'utilisateur est chiffré par la clé secrète Ks et transmis par un réseau de télécommunication approprié à un serveur d'autorisation lequel disposant également de la clé Ks est à même de retrouver le PIN de l'utilisateur et donc de délivrer l'autorisation demandée.

Le chargement de la clé secrète Ks dans le processeur sécurisé SUC du terminal 1, est une opération longue et complexe notamment du fait des exigences en matière de sécurité. Cette opération est généralement faite par les banques à partir d'outils spécialisés aptes à charger des données ou des programmes dans le microcontrôleur sécurisé SUC du terminal.

Le téléchargement de cette clé Ks peut être opérée plus simplement par l'intermédiaire de la micro carte à puce MIC. Pour ce faire, la carte MIC est munie d'un programme approprié. Le déroulement du programme est le schématiquement le suivant. La carte MIC est dotée lors de sa conception d'une clé privée S1 et d'une clé publique P1. Ces clés sont par exemple la propriété du fabricant du terminal ou de la carte MIC. La carte MIC se connecte au serveur bancaire approprié lequel dispose également d'une clé privée P1 et d'une clé publique P2. La carte MIC génère un nombre aléatoire M 1 par des moyens appropriés de génération de nombres aléatoires. Ce nombre M1 est chiffré au moyen de la clé publique P2 et envoyé sous forme chiffrée au serveur bancaire. Ce serveur disposant de la clé S2 récupère le nombre M1.

Le serveur génère à son tour un nombre M2 et le renvoie sous forme chiffrée au moyen de la clé publique P1. La carte MIC est alors à même en utilisant sa clé secrète S1 de retrouver M2. Le terminal à travers la carte MIC et le serveur sont alors les seuls à connaître la combinaison M1 et M2, cette combinaison est alors à-même de constituer une clé secrète TMK qui va être communiqué au microcontrôleur SUC de façon chiffrée, à partir d'une clé connue de la carte MIC et du microcontrôleur SUC. Le serveur bancaire peut alors transmettre de façon sécurisée la clé secrète Ks au microcontrôleur SUC en la chiffrant au moyen d'un algorithme de type DES et de la clé TMK.

En variante de réalisation, la carte MIC pourrait chiffrer le nombre M1 en utilisant sa clé privée S1, le serveur bancaire étant alors à même de déchiffrer M1, puisqu'il dispose de la clé publique P1. Dans cette variante, le serveur d'autorisation n'a pas besoin de clés.

En variante de réalisation également, il est envisageable de prévoir une étape initiale d'authentification lors de la connexion du terminal au serveur bancaire pour téléchargement de clé secrète.

Cette possibilité de télécharger à distance des clés secrètes de façon parfaitement fiable et sécurisée permet de changer régulièrement dans le temps la clé Ks utilisée par le microcontrôleur SUC pour transmettre les PIN codes, ce qui offre une plus grande sécurité.

La communication de la clé secrète issue de M1 et M2, entre le carte MIC et le microprocesseur SUC peut être opéré en utilisant la clé S1 qui aura été préalablement chargée dans le microprocesseur SUC.

La présente invention relative à l'utilisation d'au moins une micro carte à puce MIC combinée au microcontrôleur central UC, concerne plus particulièrement la mise en oeuvre dans un terminal donné de moyens de calcul additionnels, de type arithmétiques ou autre. Ces moyens incorporés dans la micro carte à puce MIC sont plus particulièrement destinés à renforcer la capacité de calcul du microcontrôleur UC équipant la plaque circuit imprimé du terminal. Ces moyens sont par ailleurs adaptés pour opérer la personnalisation du terminal comme cela a été décrit ci-dessus.

L'utilisation de la carte micro carte à puce MIC comme coprocesseur associé au microcontôleur principal UC du terminal procure de nombreux avantages et en particulier une performance accrue par rapport à un terminal ne disposant que d'un unique microcontrôleur UC car le nombre d'itérations sera plus important. De plus, cela permet de faire bénéficier de nouvelles ressources de calcul et de programmes applicatifs tous les terminaux de paiement disposant d'emplacement de lecture pour micro carte à puce de type SAM : aussi bien les nouveaux terminaux que ceux déjà commercialisés. Cela permet également d'assurer une plus grande facilité pour faire évoluer les performances du terminal (changer la micro carte à puce MIC est une opération plus simple que changer la carte mère UC). D'autre part la sécurité globale du terminal est renforcée et ce du fait qu'une carte à puce de part sa conception est très difficilement pénétrable comparée à une carte électronique classique.

Bien évidemment, le mode de réalisation illustré n'a été donné qu'à titre d'exemple et n'est absolument pas limitatif de l'ensemble des solutions pouvant être mise en oeuvre grâce à la présente invention.

En particulier, il peut être envisagé de rendre la carte MIC non directement démontable en prévoyant un logement interne au boîtier du terminal et donc non accessible depuis l'extérieur. De même, il est possible d'envisager le soudage de la carte MIC sur la plaque de circuit imprimé.

## Revendications

1. Terminal de paiement (1) lecteur de carte (ICC) comportant un circuit électronique formé d'au moins une plaque circuit imprimé sur laquelle sont connectés des composants électroniques et notamment un microcontrôleur (UC) destiné à commander différents périphériques (RFI, KB, DU), ledit microcontrôleur (UC) étant connecté à au moins un microprocesseur associé (IC), ledit au moins un microprocesseur (IC) étant intégré dans une carte à puce (MIC) comportant un connecteur standardisé pour opérer la connexion audit microcontrôleur (UC), **caractérisé en ce que** ladite carte à puce (MIC) définit un coprocesseur utilisé par ledit microcontrôleur (UC) pour réaliser des programmes tels que des calculs arithmétiques, le dit microcontrôleur (UC) du terminal (1) et ledit microprocesseur (IC) de la au moins une carte à puce (MIC) fonctionnant en parallèle pour l'exécution de tâches.

2. Terminal de paiement (1) selon la revendication 1, **caractérisé en ce que** ledit au moins un microprocesseur (IC) incorpore des circuits intégrés à logique câblée permettant des temps de calcul réduits.

3. Terminal de paiement (1) selon l'une quelconque des revendications 1 ou 2, **caractérisé en ce que** ledit au moins un microprocesseur (IC) est adapté pour opérer l'authentification des cartes de paiement à puce (ICC) à partir d'un système de type PKI à clé(s) publique(s) et privée(s).

4. Terminal de paiement (1) selon la revendication 3 **caractérisé en ce que** ledit au moins un microprocesseur (IC) opère l'authentification des cartes de paiement à puce (ICC) à partir de clés publiques (PCA, PI, PIC) et d'algorithmes de chiffrement dissymétriques de type RSA connus.

5. Terminal de paiement (1) selon l'une quelconque des revendications 1 à 4, **caractérisé en ce que** le terminal coopère avec des moyens de télécommunication et d'accès à un serveur d'autorisation à distance et **en ce que** de ledit au moins un microprocesseur (IC) est adapté pour opérer le téléchargement d'une clé secrète (Ks) destinée à chiffrer les communications entre ledit terminal (1) et ledit serveur.

6. Terminal de paiement (1) selon la revendication 5, **caractérisé en ce que** le terminal comporte un microcontrôleur sécurisé (SUC) destiné à chiffrer les nombres formant le code secret de l'utilisateur de la carte et saisi sur un clavier (KB) approprié dudit terminal 1, ledit microcontrôleur chiffrant ce code secret, au moyen d'un algorithme de chiffrement symétrique de type DES en utilisant ladite clé secrète (Ks).

7. Terminal de paiement (1) selon la revendication 6 **caractérisé en ce que** le microcontrôleur sécurisé (SUC) et ledit au moins un microprocesseur (IC) disposent d'une même clé secrète interne (S1) leur permettant d'échanger des données chiffrées au moyen d'un algorithme de chiffrement symétrique de type DES en utilisant ladite clé secrète interne (S1).

8. Terminal de paiement (1) selon l'une quelconque des revendications 5 à 7 **caractérisé en ce** qui ledit microcontrôleur (UC) et ledit au moins un microprocesseur (IC) sont adaptés pour opérer périodiquement le téléchargement de clés secrètes (Ks).

## Claims

1. Card (ICC) reader payment terminal (1) including an electronic circuit formed from at least one printed circuit board on which are connected electronic components and in particular a microcontroller (UC) designed to control various peripherals (RFI, KB, DU), said microcontroller (UC) being connected to at least one associated microprocessor (IC), said at least one microprocessor (IC) being integrated in a smart card (MIC) including a standardised connector to make the connection to said microcontroller (UC), **characterised in that** said smart card (MIC) defines a coprocessor used by said microcontroller (UC) to execute programs such as arithmetic calculations, said microcontroller (UC) of the terminal (1) and said microprocessor (IC) of the said at least one smart card (MIC) operating in parallel to execute tasks.

2. Payment terminal (1) according to claim 1, **characterised in that** said at least one microprocessor (IC) incorporates wired logic integrated circuits offering reduced calculation times.

3. Payment terminal (1) according to claim 1 or 2, **characterised in that** said at least one microprocessor (IC) is designed to authenticate payment smart cards (ICC) using a system of type PKI with public and private keys.

4. Payment terminal (1) according to claim 3, **characterised in that** said at least one microprocessor (IC) authenticates payment smart cards (ICC) using public keys (PCA, PI, PIC) and known RSA type dissymmetric encryption algorithms.

5. Payment terminal (1) according to one of claims 1 to 4, **characterised in that** the terminal cooperates with telecommunication means and means to access a remote authorisation server and **in that** said at least one microprocessor (IC) is designed to download a secret key (Ks) used to encrypt the communications between said terminal (1) and said server.

6. Payment terminal (1) according to claim 5, **characterised in that** the terminal includes a secured microcontroller (SUC) intended to encrypt the numbers forming the card user's secret code entered on a suitable keyboard (KB) of said terminal 1, said microcontroller encrypting this secret code, by means of a DES type symmetric encryption algorithm using said secret key (Ks).

7. Payment terminal (1) according to claim 6, **characterised in that** the secured microcontroller (SUC) and said at least one microprocessor (IC) share the same internal secret key (SI) allowing them to exchange encrypted data by means of a DES type symmetric encryption algorithm using said internal secret key (SI).

8. Payment terminal (1) according to one of claims 5 to 7, **characterised in that** said microcontroller (UC) and said at least one microprocessor (IC) are designed to periodically download secret keys (Ks).

## Patentansprüche

1. Bezahlungsend- und Kartenlesegerät (1) (ICC) mit einer elektronischen Schaltung bestehend aus mindestens einer gedruckten Schaltung, an die elektronische Komponenten angeschlossen sind, insbesondere ein Mikrocontroller (UC) zur Steuerung verschiedener Peripherien (RFI, KB, DU), wobei dieser Mikrocontroller (UC) an mindestens einen zugeordneten Mikroprozessor (IC) angeschlossen ist und dieser mindestens eine Mikroprozessor (IC) in eine Chipkarte (MIC) integriert ist, die eine Standardverbindung zur Herstellung der Verbindung mit dem besagten Mikrocontroller (UC) umfasst, **dadurch gekennzeichnet, dass** die besagte Chipkarte (MIC) einen Coprozessor definiert, der vom besagten Mikrocontroller (UC) zur Erstellung von Programmen, wie zum Beispiel arithmetischen Berechnungen, verwendet wird, wobei der besagte Mikrocontroller (UC) des Endgeräts (1) und der besagte Mikroprozessor (IC) der mindestens einen Chipkarte (MIC) zur Ausführung von Aufgaben parallel funktionieren.

2. Bezahlungsendgerät (1) gemäß Anspruch 1, **dadurch gekennzeichnet, dass** der mindestens eine Mikroprozessor (IC) gedruckte Schaltungen mit verkabelter Logik einschließt, die eine reduzierte Berechnungsdauer ermöglichen.

3. Bezahlungsendgerät (1) gemäß einem beliebigen der Ansprüche 1 oder 2, **dadurch gekennzeichnet, dass** der mindestens eine Mikroprozessor (IC) ausgehend von einem System vom Typ PKI mit öffentlichem(n) und privatem(n) Schlüssel(n) zur Durchführung der Authentifizierung der Chipzahlkarten (ICC) geeignet ist.

4. Bezahlungsendgerät (1) gemäß Anspruch 3, **dadurch gekennzeichnet, dass** der mindestens eine Mikroprozessor (IC) ausgehend von öffentlichen Schlüsseln (PCA, PI, PIC) und bekannten asymmetrischen Verschlüsselungsalgorithmen vom Typ RSA die Authentifizierung der Chipzahlkarten (ICC) vornimmt.

5. Bezahlungsendgerät (1) gemäß einem beliebigen der Ansprüche 1 bis 4, **dadurch gekennzeichnet, dass** das Endgerät mit Telekommunikationsmitteln und Mitteln für den Zugang zu einem entfernten Genehmigungsserver zusammenwirkt und **dadurch**, dass der mindestens eine Mikroprozessor (IC) zum Fernladen eines Geheimschlüssels (Ks) geeignet ist, der zum Verschlüsseln der Kommunikationen zwischen dem besagten Endgerät (1) und dem besagten Server bestimmt ist.

6. Bezahlungsendgerät (1) gemäß Anspruch 5, **dadurch gekennzeichnet, dass** das Endgerät einen gesicherten Mikrocontroller (SUC) umfasst, der mittels einem symmetrischen Verschlüsselungsalgorithmus vom Typ DES unter Anwendung des besagten Geheimschlüssels (Ks) zum Verschlüsseln der den Geheimcode des Kartenanwenders bildenden Ziffern bestimmt ist, welche auf einer für das Endgerät 1 geeigneten Tastatur (KB) eingegeben werden.

7. Bezahlungsendgerät (1) gemäß Anspruch 6, **dadurch gekennzeichnet, dass** der gesicherte Mikrocontroller (SUC) und der mindestens eine Mikroprozessor (IC) über denselben internen Geheimschlüssel (SI) verfügen, mit dem sie mittels einem symmetrischen Verschlüsselungsalgorithmus vom Typ DES unter Anwendung des besagten internen Geheimschlüssels (SI) verschlüsselte Daten austauschen können.

8. Bezahlungsendgerät (1) gemäß einem beliebigen der Ansprüche 5 bis 7, **dadurch gekennzeichnet, dass** der besagte Mikrocontroller (UC) und der mindestens eine Mikroprozessor (IC) zur regelmäßigen Durchführung des Fernladens von Geheimschlüsseln (Ks) geeignet sind.
